# EUROPEAN PATENT SPECIFICATION

(11) **EP 0 908 224 B1**
(45) Date of publication and mention of the grant of the patent: **01.12.2004**
(21) Application number: 98118340.3
(22) Date of filing: 28.09.1998
(51) Int. Cl.: B01D 53/94, B01J 23/652, B01J 35/06

(54) **Process for the removal of lower hydrocarbons in exhaust gas**
Verfahren zur Entfernung von niedrigen Kohlenwasserstoffen aus Abgasen
Procédé pour élimination d'hydrocarbures inférieurs des gaz d'échappement

(30) Priority: 13.10.1997 DK 116597
(43) Date of publication of application: 14.04.1999
(73) Proprietor: Haldor Topsoe A/S, 2800 Lyngby (DK)
(72) Inventor: Hansen, Poul Lenvig, 2830 Virum (DK); Johansen, Keld, 3600 Frederikssund (DK)
(74) Representative: Grünecker, Kinkeldey, Stockmair & Schwanhäusser Anwaltssozietät

(56) References cited:
- WO-A-81/03288
- GB-A- 988 244
- US-A- 4 327 190
- US-A- 5 141 912

## Description

The present invention relates to the removal of lower hydrocarbons in exhaust gas by catalytic oxidation in presence of a catalyst consisting of rhodium supported on a chromium oxide containing carrier.

The invention provides a process for the removal of lower hydrocarbons and carbon monoxide from exhaust gas containing volatile sulphur compounds, comprising passing the gas over a catalyst containing an oxide of rhodium supported on a chromium oxide Cr₂O₃/Al₂O₃ comprising carrier; and
withdrawing a purified exhaust gas.

The inventive process is in particular useful in the catalytic oxidation of the hydrocarbons in sulphur containing exhaust gases from lean-burn gas engines.

Suitable carriers for use in the invention may be in any convenient shape employed in the art. Preferably, the carrier has a monolithic structure optionally enforced with silica fibres.

### DETAILED DESCRIPTION OF THE INVENTION

### Preparation of a Rhodium Catalyst supported on a Cr₂O₃/Al₂O₃

A monolithic carrier of alumina enforced with silica fibres and with 350 cells per square inch was impregnated with chromium nitrate, by emerging the carrier two times in a 10% (v/v) aqueous chromium nitrate solution. The impregnated carrier was then dried and chromium nitrate oxidized by heating in air for two hours. The thus prepared Cr₂O₃ containing carrier was impregnated with rhodium by pore saturation of the carrier surface with an aqueous solution of RhCl₃ · 2H₂O corresponding to 6 g/l catalyst volume. The thus prepared catalyst was finally calcined at 520°C. Analysis of the final catalyst showed a content of 13% Cr and 3% Rh calculated on metallic base.

### Example 1

### Activity test of the above prepared catalyst in the removal of methane from sulphur oxide containing exhaust gas

Exhaust gas from a 1 MW caterpillar gas engine containing 10% H₂O, 5% CO₂, 8% O₂, 1500 ppm CH₄, 400 ppm CO, 150 ppm NMHC (non-methane hydrocarbons) and 0.1 ppm SO₂ with nitrogen as balance was passed at a NHSV of 10.000 h⁻¹ through the catalyst prepared as described above at different temperatures. Conversion of CO and carbonhydrides in the effluent gas was measured at different times on stream. The above conditions and results obtained thereby are summarized in Table 1 below.

**Table 1**

| Operation time h | T inlet °C | CO Conversion % | HC Conversion % |
|---|---|---|---|
| 3 | 438 | 99 | 92 |
| 23 | 439 | 100 | 87 |
| 120 | 420 | 95 | 77 |

### Example 2

Sulphur resistant test of the catalyst by contact with sulphur containing exhaust gas.

In a laboratorium scale test the same catalyst as in Example 1 was tested for methane oxidation activity of varying concentration of SO₂ in exhaust gas, consisting of 1500 ppm CH₄, 10% H₂O, air and SO₂.

The gas was passed at a NHSV of 12500h⁻¹ through the catalyst at an inlet temperature of 450°C.

The results obtained by this test are summarized in Table 2 below.

**Table 2**

| Operation time h | SO₂ [ppm] | Conversion [%] CH₄ |
|---|---|---|
| 10 | 1 | 55 |
| 60 | 1 | 55 |
| 61 | 8 | 39 |
| 73 | 8 | 37 |
| 80 | 30 | 28 |
| 100 | 30 | 28 |
| 102 | 0 | 54 |
| 150 | 0 | 68 |

As apparent from the above results sulphur poisoning of the catalyst is reversible.

## Claims

1. Process for the removal of lower hydrocarbons and carbon monoxide from exhaust gas containing volatile sulphur compounds, comprising passing the gas over a catalyst containing an oxide of rhodium supported on a Cr₂O₃/Al₂O₃ comprising carrier; and withdrawing a purified exhaust gas.

2. The process of claim 1, wherein the carrier has a monolithic structure.

3. The process of claim 2, wherein the monolithic structure is enforced with silica fibres.

## Patentansprüche

1. Verfahren zum Entfernen von niederen Kohlenwasserstoffen und Kohlenmonoxid aus Abgas, das flüchtige Schwefelverbindungen enthält, umfassend das Leiten des Gases über einen Katalysator, der ein Oxid von Rhodium enthält, das auf einem Cr₂O₃/Al₂O₃ umfassenden Träger aufgetragen ist; und
das Abziehen eines gereinigten Abgases.

2. Verfahren nach Anspruch 1, wobei der Träger eine monolithische Struktur aufweist.

3. Verfahren nach Anspruch 2, wobei die monolithische Struktur mit Siliciumdioxidfasern verstärkt ist.

## Revendications

1. Procédé pour l'élimination d'hydrocarbures inférieurs et de monoxyde de carbone à partir d'un gaz d'échappement contenant des composés soufrés volatils, comprenant le passage du gaz sur un catalyseur contenant un oxyde de rhodium supporté sur un support comprenant Cr₂O₃/Al₂O₃ ; et le soutirage d'un gaz d'échappement purifié.

2. Procédé selon la revendication 1, dans lequel le support a une structure monolithique.

3. Procédé selon la revendication 2, dans lequel la structure monolithique est renforcée avec des fibres de silice.
